# EUROPEAN PATENT SPECIFICATION

(11) **EP 3 945 061 B1**
(45) Date of publication and mention of the grant of the patent: **04.09.2024**
(21) Application number: 21188933.2
(22) Date of filing: 30.07.2021
(51) Int. Cl.: B66B 11/00, B66B 9/00

(54) **BEAM CLIMBER BATTERY CHARGING IN TRANSFER STATION**
LADEN EINER BALKENKLETTERERBATTERIE IN EINER TRANSFERSTATION
CHARGE DE BATTERIE DE PLATE-FORME À POUTRE DANS UNE STATION DE TRANSFERT

(30) Priority: 31.07.2020 US 202016944804
(43) Date of publication of application: 02.02.2022
(73) Proprietor: Otis Elevator Company, Farmington, Connecticut 06032 (US)
(72) Inventor: ROBERTS, Randy, Farmington, 06032 (US); HOLLOWELL, Richard L, Farmington, 06032 (US)
(74) Representative: Dehns

(56) References cited:
- EP-A1- 1 864 932
- US-A1- 2019 047 816

## Description

### BACKGROUND

The subject matter disclosed herein relates generally to the field of elevator systems, and specifically to a method and apparatus for charging an on-board energy management system of a propulsion system for an elevator car.

Elevator cars are conventionally operated by ropes and counter weights, which typically only allow one elevator car in an elevator shaft at a single time.

EP1864932A1 discloses a power supplying system for an elevator. This document discloses the preamble of claims 1 and 7. US2019/0047816A1 discloses an elevator installation comprising an interchange arrangement configured to remove and/or attach one or more supply units from the car during a regular door-opening cycle.

### BRIEF SUMMARY

According to a first aspect of the present invention, there is provided an elevator system as claimed in claim 1.

In some embodiments the propulsion system is a beam climber system comprising: a first wheel in contact with the first surface; and a first electric motor configured to rotate the first wheel

In some embodiments the first on-board energy management system is configured to be recharged while attached to the propulsion system.

In some embodiments the first on-board energy management system is configured to be recharged when the first on-board energy management system is located within a station or while the first on-board energy management system is traveling with the elevator car and the propulsion system through the station of the elevator system.

In some embodiments the elevator car, the first on-board energy management system, the propulsion system, and the first guide beam are configured to transfer from a first vertical section of the elevator shaft to a second vertical section of the elevator shaft when the elevator car, the propulsion system, and the first on-board energy management system is located in the station.

In some embodiments the propulsion system is configured to move the elevator car, the propulsion system, and the first on-board energy management system to the station when a state of charge of the first on-board energy management system is below a selected low state of charge.

Still according to the first aspect of the present invention, there is provided an elevator system as claimed in claim 7.

In some embodiments the first on-board energy management system is configured to be removed when the first on-board energy management system is located within a station or while the first on-board energy management system is traveling with the elevator car and the propulsion system through the station of the elevator system.

In some embodiments the second on-board energy management system is configured to be replace the first on-board energy management system when the first on-board energy management system is located within the station or while the first on-board energy management system is traveling with the elevator car and the propulsion system through a station of the elevator system.

Some embodiments include a hard automation device configured to remove the first on-board energy management system.

Some embodiments include a hard automation device configured to replace the first on-board energy management system with the second on-board energy management system.

According to a second aspect of the present invention, there is provided a method of operating an elevator system as claimed in claims 12 and 13.

In the first aspect and the second aspect, the station is at least one of a transfer station, a service station, or a parking area.

In some embodiments the propulsion system is a beam climber system and the moving, using a propulsion system, an elevator car through an elevator shaft further comprises: rotating, using a first electric motor of a beam climber system, a first wheel, the first wheel being in contact with a first surface of a first guide beam that extends vertically through the elevator shaft.

Some embodiments include recharging the first on-board energy management system.

Some embodiments include moving the beam climber system, the elevator car and the first on-board energy management system to a station to recharge the first on-board energy management system.

Technical effects of embodiments of the present invention include charging an on-board energy management system or changing out the on-board energy management system when the elevator car is located in the transfer station or any other station, such as, for example, a service station or a parking area.

The foregoing features and elements may be combined in various combinations within the scope of the appended claims. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present invention is illustrated by way of example and not limited in the accompanying figures in which like reference numerals indicate similar elements.
FIG. 1 is a schematic illustration of an elevator system with a beam climber system, in accordance with an embodiment of the invention;
FIG. 2A illustrates a schematic top view of a battery replenishment system that charges a first on-board energy management system, in accordance with an embodiment of the invention;
FIG. 2B illustrates a schematic side view of a battery replenishment system that charges the first on-board energy management system, in accordance with an embodiment of the invention;
FIG. 3A illustrates a schematic top view of a battery replenishment system that replaces the first on-board energy management system with a second on-board energy management system, in accordance with an embodiment of the invention;
FIG. 3B illustrates a schematic side view of a battery replenishment system that charges the first on-board energy management system with a second on-board energy management system, in accordance with an embodiment of the invention; and
FIG. 4 is a flow chart of method of operating an elevator system, in accordance with the invention.

### DETAILED DESCRIPTION

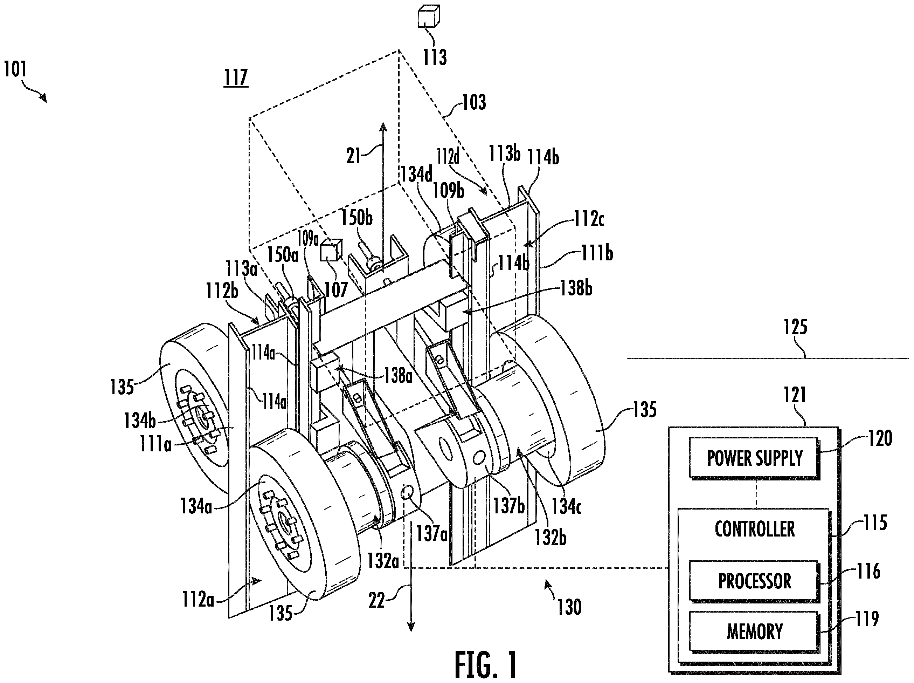

FIG. 1 is a perspective view of an elevator system 101 including an elevator car 103, a beam climber system 130, a controller 115, and a power source 120. Although illustrated in FIG. 1 as separate from the beam climber system 130, the embodiments described herein may be applicable to a controller 115 included in the beam climber system 130 (i.e., moving through an elevator shaft 117 with the beam climber system 130) and may also be applicable to a controller located off of the beam climber system 130 (i.e., remotely connected to the beam climber system 130 and stationary relative to the beam climber system 130). Although illustrated in FIG. 1 as separate from the beam climber system 130, the embodiments described herein may be applicable to a power source 120 included in the beam climber system 130 (i.e., moving through the elevator shaft 117 with the beam climber system 130) and may also be applicable to a power source located off of the beam climber system 130 (i.e., remotely connected to the beam climber system 130 and stationary relative to the beam climber system 130).

The beam climber system 130 is configured to move the elevator car 103 within the elevator shaft 117 and along guide rails 109a, 109b that extend vertically through the elevator shaft 117. In an embodiment, the guide rails 109a, 109b are T-beams. The beam climber system 130 includes one or more electric motors 132a, 132b. The electric motors 132a, 132b are configured to move the beam climber system 130 within the elevator shaft 117 by rotating one or more wheels 134a, 134b that are pressed against a guide beam 111a, 111b. In an embodiment, the guide beams 111a, 111b are I-beams. It is understood that while an I-beam is illustrated, any beam or similar structure may be utilized with the embodiment described herein. Friction between the wheels 134a, 134b, 134c, 134d driven by the electric motors 132a, 132b allows the wheels 134a, 134b, 134c, 134d to climb up 21 and down 22 the guide beams 111a, 111b. The guide beam extends vertically through the elevator shaft 117. It is understood that while two guide beams 111a, 111b are illustrated, the embodiments disclosed herein may be utilized with one or more guide beams. It is also understood that while two electric motors 132a, 132b are illustrated, the embodiments disclosed herein may be applicable to beam climber systems 130 having one or more electric motors. For example, the beam climber system 130 may have one electric motor for each of the four wheels 134a, 134b, 134c, 134d. The electrical motors 132a, 132b may be permanent magnet electrical motors, asynchronous motor, or any electrical motor known to one of skill in the art. In other embodiments, not illustrated herein, another configuration could have the powered wheels at two different vertical locations (i.e., at bottom and top of an elevator car 103).

The first guide beam 111a includes a web portion 113a and two flange portions 114a. The web portion 113a of the first guide beam 111a includes a first surface 112a and a second surface 112b opposite the first surface 112a. A first wheel 134a is in contact with the first surface 112a and a second wheel 134b is in contact with the second surface 112b. The first wheel 134a may be in contact with the first surface 112a through a tire 135 and the second wheel 134b may be in contact with the second surface 112b through a tire 135. The first wheel 134a is compressed against the first surface 112a of the first guide beam 111a by a first compression mechanism 150a and the second wheel 134b is compressed against the second surface 112b of the first guide beam 111a by the first compression mechanism 150a. The first compression mechanism 150a compresses the first wheel 134a and the second wheel 134b together to clamp onto the web portion 113a of the first guide beam 111a. The first compression mechanism 150a may be a metallic or elastomeric spring mechanism, a pneumatic mechanism, a hydraulic mechanism, a turnbuckle mechanism, an electromechanical actuator mechanism, a spring system, a hydraulic cylinder, a motorized spring setup, or any other known force actuation method. The first compression mechanism 150a may be adjustable in real-time during operation of the elevator system 101 to control compression of the first wheel 134a and the second wheel 134b on the first guide beam 111a. The first wheel 134a and the second wheel 134b may each include a tire 135 to increase traction with the first guide beam 111a.

The first surface 112a and the second surface 112b extend vertically through the shaft 117, thus creating a track for the first wheel 134a and the second wheel 134b to ride on. The flange portions 114a may work as guardrails to help guide the wheels 134a, 134b along this track and thus help prevent the wheels 134a, 134b from running off track.

The first electric motor 132a is configured to rotate the first wheel 134a to climb up 21 or down 22 the first guide beam 111a. The first electric motor 132a may also include a first motor brake 137a to slow and stop rotation of the first electric motor 132a. The first motor brake 137a may be mechanically connected to the first electric motor 132a. The first motor brake 137a may be a clutch system, a disc brake system, a drum brake system, a brake on a rotor of the first electric motor 132a, an electronic braking, an Eddy current brakes, a Magnetorheological fluid brake or any other known braking system. The beam climber system 130 may also include a first guide rail brake 138a operably connected to the first guide rail 109a. The first guide rail brake 138a is configured to slow movement of the beam climber system 130 by clamping onto the first guide rail 109a. The first guide rail brake 138a may be a caliper brake acting on the first guide rail 109a on the beam climber system 130, or caliper brakes acting on the first guide rail 109 proximate the elevator car 103.

The second guide beam 111b includes a web portion 113b and two flange portions 114b. The web portion 113b of the second guide beam 111b includes a first surface 112c and a second surface 112d opposite the first surface 112c. A third wheel 134c is in contact with the first surface 112c and a fourth wheel 134d is in contact with the second surface 112d. The third wheel 134c may be in contact with the first surface 112c through a tire 135 and the fourth wheel 134d may be in contact with the second surface 112d through a tire 135. A third wheel 134c is compressed against the first surface 112c of the second guide beam 111b by a second compression mechanism 150b and a fourth wheel 134d is compressed against the second surface 112d of the second guide beam 111b by the second compression mechanism 150b. The second compression mechanism 150b compresses the third wheel 134c and the fourth wheel 134d together to clamp onto the web portion 113b of the second guide beam 111b. The second compression mechanism 150b may be a spring mechanism, turnbuckle mechanism, an actuator mechanism, a spring system, a hydraulic cylinder, and/or a motorized spring setup. The second compression mechanism 150b may be adjustable in real-time during operation of the elevator system 101 to control compression of the third wheel 134c and the fourth wheel 134d on the second guide beam 111b. The third wheel 134c and the fourth wheel 134d may each include a tire 135 to increase traction with the second guide beam 111b.

The first surface 112c and the second surface 112d extend vertically through the shaft 117, thus creating a track for the third wheel 134c and the fourth wheel 134d to ride on. The flange portions 114b may work as guardrails to help guide the wheels 134c, 134d along this track and thus help prevent the wheels 134c, 134d from running off track.

The second electric motor 132b is configured to rotate the third wheel 134c to climb up 21 or down 22 the second guide beam 111b. The second electric motor 132b may also include a second motor brake 137b to slow and stop rotation of the second motor 132b. The second motor brake 137b may be mechanically connected to the second motor 132b. The second motor brake 137b may be a clutch system, a disc brake system, drum brake system, a brake on a rotor of the second electric motor 132b, an electronic braking, an Eddy current brake, a Magnetorheological fluid brake, or any other known braking system. The beam climber system 130 includes a second guide rail brake 138b operably connected to the second guide rail 109b. The second guide rail brake 138b is configured to slow movement of the beam climber system 130 by clamping onto the second guide rail 109b. The second guide rail brake 138b may be a caliper brake acting on the first guide rail 109a on the beam climber system 130, or caliper brakes acting on the first guide rail 109 proximate the elevator car 103.

The elevator system 101 may also include a position reference system 113. The position reference system 113 may be mounted on a fixed part at the top of the elevator shaft 117, such as on a support or guide rail 109, and may be configured to provide position signals related to a position of the elevator car 103 within the elevator shaft 117. In other embodiments, the position reference system 113 may be directly mounted to a moving component of the elevator system (e.g., the elevator car 103 or the beam climber system 130), or may be located in other positions and/or configurations as known in the art. The position reference system 113 can be any device or mechanism for monitoring a position of an elevator car within the elevator shaft 117, as known in the art. For example, without limitation, the position reference system 113 can be an encoder, sensor, accelerometer, altimeter, pressure sensor, range finder, or other system and can include velocity sensing, absolute position sensing, etc., as will be appreciated by those of skill in the art.

The controller 115 may be an electronic controller including a processor 116 and an associated memory 119 comprising computer-executable instructions that, when executed by the processor 116, cause the processor 116 to perform various operations. The processor 116 may be, but is not limited to, a single-processor or multiprocessor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 119 may be but is not limited to a random access memory (RAM), read only memory (ROM), or other electronic, optical, magnetic or any other computer readable medium.

The controller 115 is configured to control the operation of the elevator car 103 and the beam climber system 130. For example, the controller 115 may provide drive signals to the beam climber system 130 to control the acceleration, deceleration, leveling, stopping, etc. of the elevator car 103.

The controller 115 may also be configured to receive position signals from the position reference system 113 or any other desired position reference device.

When moving up 21 or down 22 within the elevator shaft 117 along the guide rails 109a, 109b, the elevator car 103 may stop at one or more landings 125 as controlled by the controller 115. In one embodiment, the controller 115 may be located remotely or in the cloud. In another embodiment, the controller 115 may be located on the beam climber system 130. In embodiment, the controller 130 controls on-board motion control of the beam climber system 115 (e.g., a supervisory function above the individual motor controllers).

The power supply 120 for the elevator system 101 may be any power source, including a power grid and/or battery power which, in combination with other components, is supplied to the beam climber system 130. In one embodiment, power source 120 may be located on the beam climber system 130. In an embodiment, the power supply 120 is a battery that is included in the beam climber system 130.

The elevator system 101 may also include an accelerometer 107 attached to the elevator car 103 or the beam climber system 130. The accelerometer 107 is configured to detect an acceleration and/or a speed of the elevator car 103 and the beam climber system 130.

It is understood that while a beam climber system 130 is illustrated herein for exemplary discussion, the embodiments disclosed herein may be applicable to other multi-car linear motor based propulsion systems, such as, for example, a permanent magnet motor propulsion system.

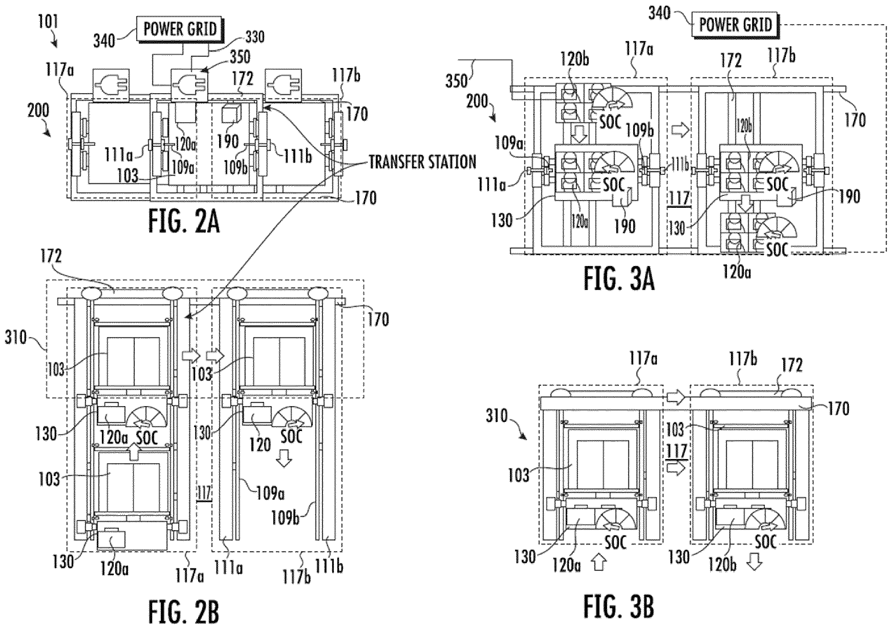

Referring now to FIGS. 2A, 2B, 3A and 3B, with continued reference to FIG. 1, a battery replenishment system 200 is illustrated, in accordance with an embodiment of the present invention. The beam climber system 130 may not include a trailing electrical cable, such that, no electrical cords extend between the beam climber system 130 and the elevator shaft during normal operation. When utilizing multiple elevator cars 103 in a single elevator shaft 117, the use of permanently attached trailing electrical cables in the elevator shaft 117 becomes difficult and complex. This becomes even more complex as the multiple different elevator cars 103a need to move between multiple different elevator shafts 117 or vertical sections (e.g., first vertical sections 117a, 117b, see discussed herein). Thus, it is advantageously to utilize on-board power supplies 120. This requires that the power supply 120 be contained onboard the elevator car 103 or the beam climber system 130 (i.e., attached in some way to the beam climber system 130, such that the power supply 120 may be electrically connected to the beam climber system 130). Since the power supply 120 may be finite, it will eventually need to be exchanged for a new power supply 120 or recharged. The embodiments described herein provide a method and apparatus for replenishing power to a power supply 120 to power the elevator car 103 and the beam climber system 130.

In an embodiment, the power supply is an on-board energy management system 120a, 120b. The on-board energy management system 120a, 120b may consist of a battery pack, supercapacitors, and/or any other energy storage device known to one of skill in the art. The battery pack may include one or more lithium ion batteries or similar battery type know to one of skill in the art. The on-board energy management system 120a, 120b is configured to travel with the elevator car 103 and the beam climber system 130. The on-board energy management system 120a, 120b is electrically connected to the beam climber system 130. The on-board energy management system 120a, 120b may be attached to the elevator car 103 or the beam climber system 130. The beam climber system 130 may be configured to move the on-board energy management system 120a, 120b along with the beam climber system 130 and the elevator car 103 to a transfer station 310 when a state of charge of the on-board energy management system 120a, 120b, is below a selected low state of charge or when the elevator system 101 requires the elevator car 103 to go through the transfer station 310. The battery replenishment system 200 is configured to charge and or transfer the on-board energy management systems 120a, 120b of the beam climber system 130 when the beam climber system 130 and the elevator car 103 is moving through a transfer station 310. The transfer station 310 may be located at the top of the elevator shaft 117 or the bottom of the elevator shaft 117. The transfer station 310 is configured to move elevator car 103, the beam climber system 130, the guide beams 111a, 111b, the guide rails 109a, 109b, from a first vertical section 117a of the elevator shaft 117 to a second vertical section 117b of the elevator shaft 117 when the elevator car 103 and the beam climber system 130 are located in the transfer station 310. This may be accomplished with the use of transfer beams 170 operably connected guide beams 111a, 111b or any similar technology. The guide beams 111a, 111b may be interconnected to the transfer beams 170 through a series of interconnected crossbeams 172. The crossbeams 172 may roll or glide along the transfer beams 170 to transfer from the first vertical section 117a to the second vertical section 117b of the elevator shaft 117.

In the embodiment illustrated in FIGS. 2A and 2B, the first on-board energy management system 120a is configured to be recharged while attached to the beam climber system 130 or in other words while being electrically connected to the beam climber system 130. In an embodiment, the first on-board energy management system 120a is charged as the elevator car 103, the beam climber system 130, the guide beams 111a, 11 1b, and the guide rails 109a, 109 are located within the transfer station 310. In another embodiment, the first on-board energy management system 120a is charged within the transfer station 310 as the elevator car 103, the beam climber system 130, the guide beams 111a, 111b, and the guide rails 109a, 109 are moved from the first vertical section 117a of the elevator shaft 117 to the second vertical section 117b of the elevator shaft 117 in the transfer station 310. The transfer station 310 is configured to move elevator car 103, the beam climber system 130, the first on-board energy management system 120a, the guide beams 111a, 111b, the guide rails 109a, 109b, from a first vertical section 117a of the elevator shaft 117 to a second vertical section 117b of the elevator shaft 117 when the elevator car 103 and the beam climber system 130 are located in the transfer station 310.

The first on-board energy management system 120a may be charged by a trailing cable 330, or similar device known to one of skill in the art, that plugs into the first on-board energy management system 120a in the transfer station 310 and moves with the first on-board energy management system 120a as the first on-board energy management system 120a is moved from the first vertical section 117a of the elevator shaft 117 to the second vertical section 117b of the elevator shaft 117. The trailing cable 330 electrically connects the first on-board energy management system 120a to a power grid 340 and the power grid 340 charges the first on-board energy management system 120a through the trailing cable 330. Adequate checks and confirmation signals may be utilized by the controller 115 to ensure proper and safe charging. The trailing cable 330 is plugged into the first on-board energy management system 120a by a hard automation device that is a mechanism with the dedicated degrees of freedom required to grab, pull, release, remove, and/or insert the on-board energy management systems 120a, 120b. The hard automation device may be a robotic arm 350. In one example, when the first on-board energy management system 120a, elevator car 103, and the beam climber system 130 enter the transfer station 310 in the first vertical section 117a of the elevator shaft 117, the trailing cable 330 may be plugged into the first on-board energy management system 120a and the trailing cable 330 may remained plugged into the first on-board energy management system 120a to charge the first on-board energy management system 120a as the first on-board energy management system 120a, elevator car 103, and the beam climber system 130 move horizontally through the transfer station 131 to the second vertical section 117b where the trailing cable 330 is removed from the first on-board energy management system 120. Alternatively, rather than a trailing cable, there be metallic contacts on the first on-board energy management system 120a that contact a charging strip connected to the power grid 340 in the transfer station 131 and the metallic contacts on the first on-board energy management system 120a slide along the charge strip to receive charge. Alternatively, there may be a wireless power charging system in the transfer station 131 to wirelessly transfer power between the power grid 340 and the first on-board energy management system 120a. The wireless power charging system may utilize wireless induction charging or any other type of wireless charging known to one of skill in the art.

In the embodiment illustrated in FIGS. 3A and 3B, the first on-board energy management system 120a is configured to be detached from the beam climber system and recharged when detached from the beam climber system 130. The first on-board energy management system 120a is removed from the elevator system and replaced by a second on-board energy management system 120b as the elevator car 103, the beam climber system 130, the guide beams 111a, 111b, and the guide rails 109a, 109 are moved from the first vertical section 117a of the elevator shaft 117 to the second vertical section 117b of the elevator shaft 117 in the transfer station 310. The second on-board energy management system 120b may be fully charged or charged to a state of charge that is greater than a selected upper state of charge. The first on-board energy management system 120a may be removed by a hard automation device that is a mechanism with the dedicated degrees of freedom required to grab, pull, release, remove, and/or insert the on-board energy management systems 120a, 120b. The hard automation device may be a robotic arm 350, or similar device known to one of skill in the art, that removes the first on-board energy management system 120a from the beam climber system 130 in the transfer station 310 and inserts the second on-board energy management system 120b into the beam climber system 130 as the beam climber system 130 and elevator car 103 is moved from the first vertical section 117a of the elevator shaft 117 to the second vertical section 117b of the elevator shaft 117. The first on-board energy management system 120a will remain in the transfer station 310 to be charged by grid power 340 until a beam climber system 130 requires the first on-board energy management system 120s. It is understood that there may be multiple beam climber systems 130 and elevator cars 103 in a single elevator shaft 117, thus the first on-board energy management system 120a and the second on-board energy management system 120b may operate as a communal or any number of shared on-board energy management system from multiple different elevator cars 103 to utilize. There may multiple shared on-board energy management systems held in reserve for some to be in use while others charge.

Prior to entering the transfer station 310, the elevator system 101 may be required to determine whether the elevator car 103 is empty of humans. In an embodiment, the elevator car 103 may be prevented from entering the transfer station 310 if humans are detected in the elevator car 103. In other words, in an embodiment, the elevator car 103 must be free of humans prior to the elevator car 103 entering the transfer station 310. It is understood that the embodiments disclosed herein are not limited to the elevator car 103 being free of humans with the transfer station 310. This is dependent of the intensity of movement of the elevator car 103 movement within the transfer station 310 and/or duration of the elevator car 103 being with the transfer station 310. If the movement of the elevator car 103 is intense the elevator car 103 would have to be free of humans but if the movement is at or below normal intensity then humans may be located in the elevator car 103. Normal intensity of movement would be the movement utilized when normally carrying humans during normal operations.

The elevator system 101 may include a human sensing device 190. The human sensing device 190 may be composed of at least one of a camera, a depth sensing device, a RADAR device, a thermal detection device, a floor pressure sensor, a microphone, or any similar human detection device known to one of skill in the art. The human sensing device 190 may also comprise any other device capable of sensing the presence of humans, as known to one of skill in the art. The human sensing device 190 may utilize the camera to detect a human and/or an object within the elevator car 103. The camera may be configured to capture an image or video within the elevator car 103. The depth sensing device may be a 2-D, 3-D or other depth/distance detecting camera that utilizes detected distance to an object and/or a human to detect a human and/or an object within the elevator car 103. The depth sensing device generates depth maps for analysis. The RADAR device may utilize radio waves to detect a human and/or an object within the elevator car 103. The RADAR device generates RADAR signals for analysis. The thermal detection device may be an infrared or other heat sensing camera that utilizes detected temperature to detect a human and/or an object within the elevator car 103. The thermal detection device generates thermal images for analysis. The floor pressure sensor may be one or more pressure sensors located in the floor of an elevator car 103 that utilizes pressure data on the floor to detect a human and/or an object within the elevator car 103. The floor pressure sensor generates a pressure map for analysis. The human sensing device 190 may additionally include a microphone configured to capture sound data within the elevator car 103. As may be appreciated by one of skill in the art, in addition to the stated methods, additional methods may exist to detect humans and objects, thus one or any combination of these methods may be used to determine the presence of humans or objects in an elevator car 103.

The human sensing device 190 may utilize a cognitive service that is configured to detect an individual and/or an object within the elevator car 103 through image recognition, video analytics, neural networks, machine learning, deep learning, artificial intelligence, speech recognition, computer vision, video indexer or any other known method to one of skill in the art.

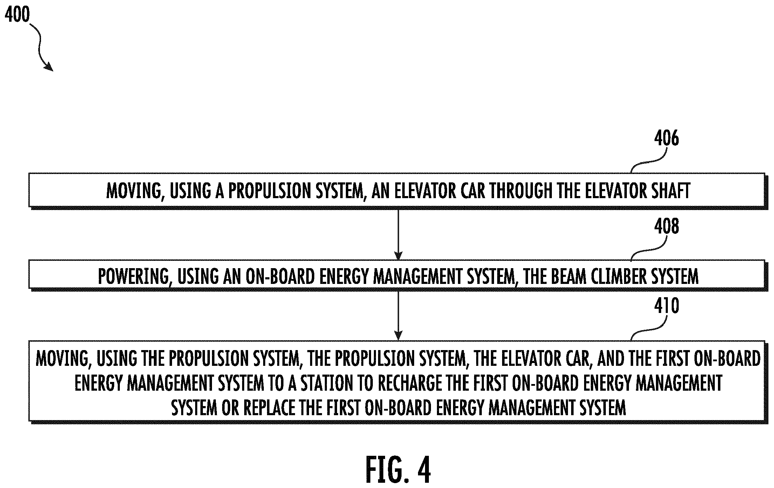

Referring now to FIG. 4, with continued reference to the previous FIGS., a flow chart of method 400 of operating an elevator systems 101 is illustrated, in accordance with an embodiment of the invention.

At block 406, the beam climber system 130 moves an elevator car 103 through the elevator shaft when the first wheel 134a of the beam climber system 130 rotates along the first surface 112a of the first guide beam 111a. Block 404 may further comprise that a first electric motor 132a of a beam climber system 130 rotates a first wheel 134a to move the elevator car 103 through the elevator shaft 117. The first wheel 134a being in contact with a first surface 112a of a first guide beam 111a that extends vertically through an elevator shaft 117.

At block 408, the first on-board energy management system 120a powers the beam climber system 130.

At block 410, the propulsion system moves the propulsion system, the elevator car 103, and the first on-board energy management system 120a to a station to recharge the first on-board energy management system 120a or replace the first on-board energy management system 120a.

Once the first on-board energy management system 120a is recharged or replaced the controller 115 may confirm that the on-board energy management system currently installed in the propulsion is healthy and free to move away from the station and thus resume normal operations.

In the present invention, the station is at least one of a transfer station 310, a service station, or a parking area.

The method 400 may further comprise that the first on-board energy management system 120a is recharged. The beam climber system 130, the elevator car 103, and the first on-board energy management system 120a may be moved to a station 310 to recharge the first on-board energy management system 120a.

The method 400 may further comprise that a trailing cable 330 is electrically connected to the first on-board energy management system 120a. The first on-board energy management system 120a is electrically connected to a power grid 340 and the power grid 340 is configured to charge the first on-board energy management system 120a through the trailing cable 330 when the first on-board energy management system 120a is within the station.

The method 400 may further comprise that the beam climber system 130, the elevator car 103, and the first on-board energy management system 120a are moved through the station while recharging the first on-board energy management system 120a.

The method 400 may additionally comprise that the first on-board energy management system 120a is removed from the beam climber system 130 and a second on-board energy management system 120b is electrically connected to the beam climber system 130. The second on-board energy management system 120b powers the beam climber system 120a.

While the above description has described the flow process of FIG. 3 in a particular order, it should be appreciated that unless otherwise specifically required in the attached claims that the ordering of the steps may be varied.

The present invention may be a system, a method, and/or a computer program product at any possible technical detail level of integration. The computer program product may include a computer readable storage medium (or media) having computer readable program instructions thereon for causing a processor to carry out aspects of the present invention.

As described above, embodiments can be in the form of processor-implemented processes and devices for practicing those processes, such as processor. Embodiments can also be in the form of computer program code (e.g., computer program product) containing instructions embodied in tangible media (e.g., non-transitory computer readable medium), such as floppy diskettes, CD ROMs, hard drives, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present invention is not thus limited. Rather, the present invention can be modified within the scope of the appended claims Accordingly, the present invention is not to be seen as limited by the foregoing description, but is only limited by the scope of the appended claims.

## Claims

1. An elevator system (101) comprising:
an elevator car (103) configured to travel through an elevator shaft (117);
a first guide beam (111a) extending vertically through the elevator shaft (117), the first guide beam (111a) comprising a first surface (112a) and a second surface (112b) opposite the first surface (112a);
a propulsion system (130) configured to move the elevator car (103) through the elevator shaft (117);
a first on-board energy management system (120a) configured to power the propulsion system (130), the first on-board energy management system (120a) being attached to the propulsion system (130) and configured to travel with the propulsion system (130);
a trailing cable (330) electrically connected to a power grid (340), wherein the power grid (340) is configured to charge the first on-board energy management system (120a) through the trailing cable (330) when the first on-board energy management system (120a) is within a station (310),
**characterized in that** the station (310) is at least one of a transfer station, a service station, or a parking area; and
further **characterized by** comprising a hard automation device (350) configured to connect the trailing cable (330) to the first on-board energy management system (120a), wherein the hard automation device (350) is a mechanism with the dedicated degrees of freedom required to grab, pull, release, remove, and/or insert the first on-board energy management system.

2. The elevator system (101) of claim 1, wherein the propulsion system (130) is a beam climber system (130) comprising:
a first wheel (134a) in contact with the first surface (112a); and
a first electric motor (132a) configured to rotate the first wheel (134a).

3. The elevator system (101) of claim 1 or 2, wherein the first on-board energy management system (120a) is configured to be recharged while attached to the propulsion system (130).

4. The elevator system (101) of any preceding claim, wherein the first on-board energy management system (120a) is configured to be recharged when the first on-board energy management system (120a) is located within the station (310) or while the first on-board energy management system (120a) is traveling with the elevator car (103) and the propulsion system (130) through the station (310) of the elevator system (101).

5. The elevator system (101) of any preceding claim, wherein the elevator car (103), the first on-board energy management system (120a), the propulsion system (130), and the first guide beam (111a) are configured to transfer from a first vertical section (117a) of the elevator shaft (117) to a second vertical section (117b) of the elevator shaft (117) when the elevator car (103), the propulsion system (130), and the first on-board energy management system (120a) are located in the station (310).

6. The elevator system (101) of any preceding claim, wherein the propulsion system (130) is configured to move the elevator car (103), the propulsion system (130), and the first on-board energy management system (120a) to the station (310) when a state of charge of the first on-board energy management system (120a) is below a selected low state of charge.

7. An elevator system (101) comprising:
an elevator car (103) configured to travel through an elevator shaft (117);
a first guide beam (111a) extending vertically through the elevator shaft (117), the first guide beam (111a) comprising a first surface (112a) and a second surface (112b) opposite the first surface (112a);
a propulsion system (130) configured to move the elevator car (103) through the elevator shaft (117);
a first on-board energy management system (120a) configured to power the propulsion system (130), the first on-board energy management system (120a) being attached to the propulsion system (130) and configured to travel with the propulsion system (130);
**characterized in that** the first on-board energy management system (120a) is configured to be recharged when detached from the propulsion system (130) and replaced by a second on-board energy management system (120b), the second on-board energy management system (120b) being configured to power the propulsion system (130) when the first on-board energy management system (120a) is detached;
wherein the elevator car (103), the propulsion system (130), and the first guide beam (111a) are configured to transfer from a first vertical section (117a) of the elevator shaft (117) to a second vertical section (117b) of the elevator shaft (117) when the elevator car (103) and the propulsion system (130) are located in a station (310), wherein the station (310) is at least one of a transfer station, a service station, or a parking area.

8. The elevator system (101) of claim 7, wherein:
the first on-board energy management system (120a) is configured to be removed when the first on-board energy management system (120a) is located within the station (310) or while the first on-board energy management system (120a) is traveling with the elevator car (103) and the propulsion system (130) through the station (310) of the elevator system (101); and/or
the second on-board energy management system (120b) is configured to replace the first on-board energy management system (120a) when the first on-board energy management system (120a) is located within the station (310) or while the first on-board energy management system (120a) is traveling with the elevator car (103) and the propulsion system (130) through the station (310) of the elevator system (101).

9. The elevator system (101) of claim 7 or 8, further comprising:
a hard automation device (350) configured to remove the first on-board energy management system (120a); and/or
a hard automation device (350) configured to replace the first on-board energy management system (120a) with the second on-board energy management system (120b);
wherein the hard automation device (350) is a mechanism with the dedicated degrees of freedom required to grab, pull, release, remove, and/or insert the on-board energy management systems.

10. The elevator system (101) of any of claims 7 to 9, wherein the propulsion system (130) is a beam climber system (130) comprising:
a first wheel (134a) in contact with the first surface (112a); and
a first electric motor (132a) configured to rotate the first wheel (134a).

11. The elevator system (101) of any of claims 7 to 10, wherein the propulsion system (130) is configured to move the elevator car (103), the propulsion system (130), and the first on-board energy management system (120a) to the station (310) when a state of charge of the first on-board energy management system (120a) is below a selected low state of charge.

12. A method of operating an elevator system (101) comprising:
moving, using a propulsion system (130), an elevator car (103) through an elevator shaft (117);
powering, using a first on-board energy management system (120a), the propulsion system (130); and
moving, using the propulsion system (130), the propulsion system (130), the elevator car (103), and the first on-board energy management system (120a) to a station (310) to recharge the first on-board energy management system (120a), wherein the station (310) is at least one of a transfer station (310), a service station, or a parking area, the elevator system comprising a trailing cable (330) electrically connected to a power grid (340), wherein the power grid (340) is configured to charge the first on-board energy management system (120a) through the trailing cable (330) when the first on-board energy management system (120a) is within the station (130), and comprising a hard automation device (350) configured to connect the trailing cable (330) to the first on-board energy management system (120a), wherein the hard automation device (350) is a mechanism with the dedicated degrees of freedom required to grab, pull, release, remove, and/or insert the first on-board energy management system.

13. A method of operating an elevator system (101) comprising:
moving, using a propulsion system (130), an elevator car (103) through an elevator shaft (117);
powering, using a first on-board energy management system (120a), the propulsion system (130); and
moving, using the propulsion system (130), the propulsion system (130), the elevator car (103), and the first on-board energy management system (120a) to a station (310) to replace the first on-board energy management system (120a), wherein the first on-board energy management system (120a) is configured to be recharged when detached from the propulsion system (130) and replaced by a second on-board energy management system (120b), the second on-board energy management system (120b) being configured to power the propulsion system (130) when the first on-board energy management system (120a) is detached, wherein the elevator car (103), the propulsion system (130), and the first guide beam (111a) are configured to transfer from a first vertical section (117a) of the elevator shaft (117) to a second vertical section (117b) of the elevator shaft (117) when the elevator car (103) and the propulsion system (130) are located in a station (310), wherein the station (310) is at least one of a transfer station, a service station, or a parking area.

14. The method of claim 12 or 13, wherein the propulsion system (130) is a beam climber system (130) and the moving, using a propulsion system (130), an elevator car (103) through an elevator shaft (117) further comprises:
rotating, using a first electric motor (132a) of a beam climber system (130), a first wheel (134a), the first wheel (134a) being in contact with a first surface (112a) of a first guide beam (111a) that extends vertically through the elevator shaft (117).

15. The elevator system of claim 1 or 9, or the method of claim 12, wherein the hard automation device is a robotic arm.

## Patentansprüche

1. Aufzugssystem (101), Folgendes umfassend:
eine Aufzugskabine (103), die konfiguriert ist, um durch einen Aufzugsschacht (117) zu fahren;
einen ersten Führungsbalken (111a), der sich vertikal durch den Aufzugsschacht (117) erstreckt, wobei der erste Führungsbalken (111a) eine erste Oberfläche (112a) und eine der ersten Oberfläche (112a) gegenüberliegende zweite Oberfläche (112b) umfasst;
ein Antriebssystem (130), das konfiguriert ist, um die Aufzugskabine (103) durch den Aufzugsschacht (117) zu bewegen;
ein erstes bordeigenes Energieverwaltungssystem (120a), das konfiguriert ist, um das Antriebssystem (130) anzutreiben, wobei das erste bordeigene Energieverwaltungssystem (120a) an dem Antriebssystem (130) angebracht und konfiguriert ist, um mit dem Antriebssystem (130) zu fahren;
ein Schleppkabel (330), das elektrisch mit einem Stromnetz (340) verbunden ist, wobei das Stromnetz (340) konfiguriert ist, um das erste bordeigene Energieverwaltungssystem (120a) über das Schleppkabel (330) aufzuladen, wenn sich das erste bordeigene Energieverwaltungssystem (120a) innerhalb einer Station (310) befindet, **dadurch gekennzeichnet, dass** die Station (310) mindestens eine von einer Transferstation, einer Servicestation oder einem Parkbereich ist; und
ferner **dadurch gekennzeichnet, dass** es eine harte Automatisierungsvorrichtung (350) umfasst, die konfiguriert ist, um das Schleppkabel (330) mit dem ersten bordeigenen Energieverwaltungssystem (120a) zu verbinden, wobei die harte Automatisierungsvorrichtung (350) ein Mechanismus mit den dedizierten Freiheitsgraden ist, die erforderlich sind, um das erste bordeigene Energieverwaltungssystem zu greifen, zu ziehen, zu lösen, zu entfernen und/oder einzusetzen.

2. Aufzugssystem (101) nach Anspruch 1, wobei das Antriebssystem (130) ein Balkenkletterersystem (130) ist, Folgendes umfassend:
ein erstes Rad (134a) in Kontakt mit der ersten Oberfläche (112a); und
einen ersten Elektromotor (132a), der konfiguriert ist, um das erste Rad (134a) zu drehen.

3. Aufzugssystem (101) nach Anspruch 1 oder 2, wobei das erste bordeigene Energieverwaltungssystem (120a) konfiguriert ist, um wieder aufgeladen zu werden, während es an das Antriebssystem (130) angebracht ist.

4. Aufzugssystem (101) nach einem der vorhergehenden Ansprüche, wobei das erste bordeigene Energieverwaltungssystem (120a) konfiguriert ist, um wieder aufgeladen zu werden, wenn sich das erste bordeigene Energieverwaltungssystem (120a) innerhalb der Station (310) befindet oder während das erste bordeigene Energieverwaltungssystem (120a) mit der Aufzugskabine (103) und dem Antriebssystem (130) durch die Station (310) des Aufzugssystems (101) fährt.

5. Aufzugssystem (101) nach einem der vorhergehenden Ansprüche, wobei die Aufzugskabine (103), das erste bordeigene Energieverwaltungssystem (120a), das Antriebssystem (130) und der erste Führungsbalken (111a) konfiguriert sind, um von einem ersten vertikalen Abschnitt (117a) des Aufzugsschachtes (117) zu einem zweiten vertikalen Abschnitt (117b) des Aufzugsschachtes (117) zu übergehen, wenn sich die Aufzugskabine (103), das Antriebssystem (130) und das erste bordeigene Energieverwaltungssystem (120a) in der Station (310) befinden.

6. Aufzugssystem (101) nach einem der vorhergehenden Ansprüche, wobei das Antriebssystem (130) konfiguriert ist, um die Aufzugskabine (103), das Antriebssystem (130) und das erste bordeigene Energieverwaltungssystem (120a) zu der Station (310) zu bewegen, wenn ein Ladezustand des ersten bordeigenen Energieverwaltungssystems (120a) unterhalb eines ausgewählten niedrigen Ladezustands liegt.

7. Aufzugssystem (101), Folgendes umfassend:
eine Aufzugskabine (103), die konfiguriert ist, um durch einen Aufzugsschacht (117) zu fahren;
einen ersten Führungsbalken (111a), der sich vertikal durch den Aufzugsschacht (117) erstreckt, wobei der erste Führungsbalken (111a) eine erste Oberfläche (112a) und eine der ersten Oberfläche (112a) gegenüberliegende zweite Oberfläche (112b) umfasst;
ein Antriebssystem (130), das konfiguriert ist, um die Aufzugskabine (103) durch den Aufzugsschacht (117) zu bewegen;
ein erstes bordeigenes Energieverwaltungssystem (120a), das konfiguriert ist, um das Antriebssystem (130) anzutreiben, wobei das erste bordeigene Energieverwaltungssystem (120a) an dem Antriebssystem (130) angebracht und konfiguriert ist, um mit dem Antriebssystem (130) zu fahren;
**dadurch gekennzeichnet, dass** das erste bordeigene Energieverwaltungssystem (120a) konfiguriert ist, um wieder aufgeladen zu werden, wenn es von dem Antriebssystem (130) abgenommen und durch ein zweites bordeigenes Energieverwaltungssystem (120b) ersetzt wird, wobei das zweite bordeigene Energieverwaltungssystem (120b) konfiguriert ist, um das Antriebssystem (130) mit Strom zu versorgen, wenn das erste bordeigene Energieverwaltungssystem (120a) abgenommen wird;
wobei die Aufzugskabine (103), das Antriebssystem (130) und der erste Führungsbalken (111a) konfiguriert sind, um von einem ersten vertikalen Abschnitt (117a) des Aufzugsschachtes (117) zu einem zweiten vertikalen Abschnitt (117b) des Aufzugsschachtes (117) zu übergehen, wenn sich die Aufzugskabine (103) und das Antriebssystem (130) in einer Station (310) befinden, wobei die Station (310) mindestens eine von einer Transferstation, einer Servicestation oder einem Parkbereich ist.

8. Aufzugssystem (101) nach Anspruch 7, wobei:
das erste bordeigene Energieverwaltungssystem (120a) konfiguriert ist, um entfernt zu werden, wenn sich das erste bordeigene Energieverwaltungssystem (120a) innerhalb der Station (310) befindet oder während das erste bordeigene Energieverwaltungssystem (120a) mit der Aufzugskabine (103) und dem Antriebssystem (130) durch die Station (310) des Aufzugssystems (101) fährt; und/oder
das zweite bordeigene Energieverwaltungssystem (120b) konfiguriert ist, um das erste bordeigene Energieverwaltungssystem (120a) zu ersetzen, wenn sich das erste bordeigene Energieverwaltungssystem (120a) innerhalb der Station (310) befindet oder während das erste bordeigene Energieverwaltungssystem (120a) mit der Aufzugskabine (103) und dem Antriebssystem (130) durch die Station (310) des Aufzugssystems (101) fährt.

9. Aufzugssystem (101) nach Anspruch 7 oder 8, ferner Folgendes umfassend:
eine harte Automatisierungsvorrichtung (350), die konfiguriert ist, um das erste bordeigene Energieverwaltungssystem (120a) zu entfernen; und/oder
eine harte Automatisierungsvorrichtung (350), die konfiguriert ist, um das erste bordeigene Energieverwaltungssystem (120a) durch das zweite bordeigene Energieverwaltungssystem (120b) zu ersetzen;
wobei die harte Automatisierungsvorrichtung (350) ein Mechanismus mit den dedizierten Freiheitsgraden ist, die erforderlich sind, um die bordeigenen Energieverwaltungssysteme zu greifen, zu ziehen, zu lösen, zu entfernen und/oder einzusetzen.

10. Aufzugssystem (101) nach einem der Ansprüche 7 bis 9, wobei das Antriebssystem (130) ein Balkenkletterersystem (130) ist, Folgendes umfassend:
ein erstes Rad (134a) in Kontakt mit der ersten Oberfläche (112a); und
einen ersten Elektromotor (132a), der konfiguriert ist, um das erste Rad (134a) zu drehen.

11. Aufzugssystem (101) nach einem der Ansprüche 7 bis 10, wobei das Antriebssystem (130) konfiguriert ist, um die Aufzugskabine (103), das Antriebssystem (130) und das erste bordeigene Energieverwaltungssystem (120a) zu der Station (310) zu bewegen, wenn ein Ladezustand des ersten bordeigenen Energieverwaltungssystems (120a) unterhalb eines ausgewählten niedrigen Ladezustands liegt.

12. Verfahren zum Betreiben eines Aufzugsystems (101), Folgendes umfassend:
Bewegen einer Aufzugskabine (103) unter Verwendung eines Antriebssystems (130) durch einen Aufzugsschacht (117);
Versorgen des Antriebssystems (130) mit Strom unter Verwendung eines ersten bordeigenen Energieverwaltungssystems (120a); und
Bewegen des Antriebssystems (130), der Aufzugskabine (103) und des ersten bordeigenen Energieverwaltungssystems (120a) unter Verwendung des Antriebssystems (130) zu einer Station (310), um das erste bordeigene Energieverwaltungssystem (120a) wieder aufzuladen, wobei die Station (310) mindestens eine von einer Transferstation (310), einer Servicestation oder einem Parkbereich ist, wobei das Aufzugssystem ein Schleppkabel (330) umfasst, das elektrisch mit einem Stromnetz (340) verbunden ist, wobei das Stromnetz (340) konfiguriert ist, um das erste bordeigene Energieverwaltungssystem (120a) über das Schleppkabel (330) aufzuladen, wenn sich das erste bordeigene Energieverwaltungssystem (120a) innerhalb der Station (130) befindet, und eine harte Automatisierungsvorrichtung (350) umfasst, die konfiguriert ist, um das Schleppkabel (330) mit dem ersten bordeigenen Energieverwaltungssystem (120a) zu verbinden, wobei die harte Automatisierungsvorrichtung (350) ein Mechanismus mit den dedizierten Freiheitsgraden ist, die erforderlich sind, um das erste bordeigene Energieverwaltungssystem zu greifen, zu ziehen, zu lösen, zu entfernen und/oder einzusetzen.

13. Verfahren zum Betreiben eines Aufzugsystems (101), Folgendes umfassend:
Bewegen einer Aufzugskabine (103) unter Verwendung eines Antriebssystems (130) durch einen Aufzugsschacht (117);
Versorgen des Antriebssystems (130) mit Strom unter Verwendung eines ersten bordeigenen Energieverwaltungssystems (120a); und
Bewegen des Antriebssystems (130), der Aufzugskabine (103) und des ersten bordeigenen Energieverwaltungssystems (120a) unter Verwendung des Antriebssystems (130) zu einer Station (310), um das erste bordeigene Energieverwaltungssystem (120a) zu ersetzen, wobei das erste bordeigene Energieverwaltungssystem (120a) konfiguriert ist, um wieder aufgeladen zu werden, wenn es von dem Antriebssystem (130) abgenommen und durch ein zweites bordeigenes Energieverwaltungssystem (120b) ersetzt wird, wobei das zweite bordeigene Energieverwaltungssystem (120b) konfiguriert ist, um das Antriebssystem (130) mit Strom zu versorgen, wenn das erste bordeigene Energieverwaltungssystem (120a) abgenommen wird, wobei die Aufzugskabine (103), das Antriebssystem (130) und der erste Führungsbalken (111a) konfiguriert sind, um von einem ersten vertikalen Abschnitt (117a) des Aufzugsschachtes (117) zu einem zweiten vertikalen Abschnitt (117b) des Aufzugsschachtes (117) zu übergehen, wenn sich die Aufzugskabine (103) und das Antriebssystem (130) in einer Station (310) befinden, wobei die Station (310) mindestens eine von einer Transferstation, einer Servicestation oder einem Parkbereich ist.

14. Verfahren nach Anspruch 12 oder 13, wobei das Antriebssystem (130) ein Balkenkletterersystem (130) ist und das Bewegen einer Aufzugskabine (103) durch einen Aufzugsschacht (117) unter Verwendung eines Antriebssystems (130) ferner Folgendes umfasst: Drehen eines ersten Rades (134a) unter Verwendung eines ersten Elektromotors (132a) eines Balkenkletterersystems (130), wobei das erste Rad (134a) in Kontakt mit einer ersten Oberfläche (112a) eines ersten Führungsbalkens (111a) steht, der sich vertikal durch den Aufzugsschacht (117) erstreckt.

15. Aufzugssystem nach Anspruch 1 oder 9 oder Verfahren nach Anspruch 12, wobei die harte Automatisierungsvorrichtung ein Roboterarm ist.

## Revendications

1. Système d'ascenseur (101) comprenant :
une cabine d'ascenseur (103) configurée pour se déplacer à travers une cage d'ascenseur (117) ;
une première poutre de guidage (111a) s'étendant verticalement à travers la cage d'ascenseur (117), la première poutre de guidage (111a) comprenant une première surface (112a) et une seconde surface (112b) opposée à la première surface (112a) ;
un système de propulsion (130) configuré pour déplacer la cabine d'ascenseur (103) à travers la cage d'ascenseur (117) ;
un premier système de gestion d'énergie embarqué (120a) configuré pour alimenter le système de propulsion (130), le premier système de gestion d'énergie embarqué (120a) étant fixé au système de propulsion (130) et configuré pour se déplacer avec le système de propulsion (130) ;
un câble traînant (330) connecté électriquement à un réseau électrique (340), dans lequel le réseau électrique (340) est configuré pour charger le premier système de gestion d'énergie embarqué (120a) à travers le câble traînant (330) lorsque le premier système de gestion d'énergie embarqué (120a) se trouve à l'intérieur d'une station (310), **caractérisé en ce que** la station (310) est au moins l'une parmi une station de transfert, une station-service ou une aire de stationnement ; et
**caractérisé en outre en ce qu'**il comprend un dispositif d'automatisation matérielle (350) configuré pour connecter le câble traînant (330) au premier système de gestion d'énergie embarqué (120a), dans lequel le dispositif d'automatisation matérielle (350) est un mécanisme avec les degrés de liberté dédiés requis pour saisir, tirer, libérer, retirer et/ou insérer le premier système de gestion d'énergie embarqué.

2. Système d'ascenseur (101) selon la revendication 1, dans lequel le système de propulsion (130) est un système de plate-forme à poutre (130) comprenant :
une première roue (134a) en contact avec la première surface (112a) ; et
un premier moteur électrique (132a) configuré pour faire tourner la première roue (134a).

3. Système d'ascenseur (101) selon la revendication 1 ou 2, dans lequel le premier système de gestion d'énergie embarqué (120a) est configuré pour être rechargé tout en étant attaché au système de propulsion (130).

4. Système d'ascenseur (101) selon une quelconque revendication précédente, dans lequel le premier système de gestion d'énergie embarqué (120a) est configuré pour être rechargé lorsque le premier système de gestion d'énergie embarqué (120a) est situé à l'intérieur de la station (310) ou pendant que le premier système de gestion d'énergie embarqué (120a) se déplace avec la cabine d'ascenseur (103) et le système de propulsion (130) à travers la station (310) du système d'ascenseur (101).

5. Système d'ascenseur (101) selon une quelconque revendication précédente, dans lequel la cabine d'ascenseur (103), le premier système de gestion d'énergie embarqué (120a), le système de propulsion (130) et la première poutre de guidage (111a) sont configurés pour passer d'une première section verticale (117a) de la cage d'ascenseur (117) à une seconde section verticale (117b) de la cage d'ascenseur (117) lorsque la cabine d'ascenseur (103), le système de propulsion (130) et le premier système de gestion d'énergie embarqué (120a) sont situés dans la station (310).

6. Système d'ascenseur (101) selon une quelconque revendication précédente, dans lequel le système de prolsion (130) est configuré pour déplacer la cabine d'ascenseur (103), le système de propulsion (130) et le premier système de gestion d'énergie embarqué (120a) vers la station (310) lorsqu'un état de charge du premier système de gestion d'énergie embarqué (120a) est inférieur à un état de charge faible sélectionné.

7. Système d'ascenseur (101) comprenant :
une cabine d'ascenseur (103) configurée pour se déplacer à travers une cage d'ascenseur (117) ;
une première poutre de guidage (111a) s'étendant verticalement à travers la cage d'ascenseur (117), la première poutre de guidage (111a) comprenant une première surface (112a) et une seconde surface (112b) opposée à la première surface (112a) ;
un système de propulsion (130) configuré pour déplacer la cabine d'ascenseur (103) à travers la cage d'ascenseur (117) ;
un premier système de gestion d'énergie embarqué (120a) configuré pour alimenter le système de propulsion (130), le premier système de gestion d'énergie embarqué (120a) étant fixé au système de propulsion (130) et configuré pour se déplacer avec le système de propulsion (130) ;
**caractérisé en ce que** le premier système de gestion d'énergie embarqué (120a) est configuré pour être rechargé lorsqu'il est détaché du système de propulsion (130) et remplacé par un second système de gestion d'énergie embarqué (120b), le second système de gestion d'énergie embarqué un système (120b) étant configuré pour alimenter le système de propulsion (130) lorsque le premier système de gestion d'énergie embarqué (120a) est détaché ;
dans lequel la cabine d'ascenseur (103), le système de propulsion (130) et la première poutre de guidage (111a) sont configurés pour passer d'une première section verticale (117a) de la cage d'ascenseur (117) à une seconde section verticale (117b) de la cage d'ascenseur (117) lorsque la cabine d'ascenseur (103) et le système de propulsion (130) sont situés dans une station (310), dans lequel la station (310) est au moins l'une parmi une station de transfert, une station-service ou une aire de stationnement.

8. Système d'ascenseur (101) selon la revendication 7, dans lequel :
le premier système de gestion d'énergie embarqué (120a) est configuré pour être retiré lorsque le premier système de gestion d'énergie embarqué (120a) est situé à l'intérieur de la station (310) ou pendant que le premier système de gestion d'énergie embarqué (120a) se déplace avec la cabine d'ascenseur (103) et le système de propulsion (130) à travers la station (310) du système d'ascenseur (101) ; et/ou
le second système de gestion d'énergie embarqué (120b) est configuré pour remplacer le premier système de gestion d'énergie embarqué (120a) lorsque le premier système de gestion d'énergie embarqué (120a) est situé à l'intérieur de la station (310) ou pendant que le premier système de gestion d'énergie embarqué (120a) se déplace avec la cabine d'ascenseur (103) et le système de propulsion (130) à travers la station (310) du système d'ascenseur (101).

9. Système d'ascenseur (101) selon la revendication 7 ou 8, comprenant en outre :
un dispositif d'automatisation matérielle (350) configuré pour supprimer le premier système de gestion d'énergie embarqué (120a) ; et/ou
un dispositif d'automatisation matérielle (350) configuré pour remplacer le premier système de gestion d'énergie embarqué (120a) par le second système de gestion d'énergie embarqué (120b) ;
dans lequel le dispositif d'automatisation matérielle (350) est un mécanisme avec les degrés de liberté dédiés requis pour saisir, tirer, libérer, retirer et/ou insérer les systèmes de gestion d'énergie embarqués.

10. Système d'ascenseur (101) selon l'une quelconque des revendications 7 à 9, dans lequel le système de propulsion (130) est un système de plate-forme à poutre (130) comprenant :
une première roue (134a) en contact avec la première surface (112a) ; et
un premier moteur électrique (132a) configuré pour faire tourner la première roue (134a).

11. Système d'ascenseur (101) selon l'une quelconque des revendications 7 à 10, dans lequel le système de propulsion (130) est configuré pour déplacer la cabine d'ascenseur (103), le système de propulsion (130) et le premier système de gestion d'énergie embarqué (120a) vers la station (310) lorsqu'un état de charge du premier système de gestion d'énergie embarqué (120a) est inférieur à un état de charge faible sélectionné.

12. Procédé de fonctionnement d'un système d'ascenseur (101) comprenant :
le déplacement, à l'aide d'un système de propulsion (130), d'une cabine d'ascenseur (103) à travers une cage d'ascenseur (117) ;
l'alimentation, à l'aide d'un premier système de gestion d'énergie embarqué (120a), du système de propulsion (130) ; et
le déplacement, à l'aide du système de propulsion (130), du système de propulsion (130), de la cabine d'ascenseur (103) et du premier système de gestion d'énergie embarqué (120a) vers une station (310) pour recharger le premier système de gestion d'énergie embarqué (120a), dans lequel la station (310) est au moins l'une parmi une station de transfert (310), une station-service ou une aire de stationnement, le système d'ascenseur comprenant un câble traînant (330) connecté électriquement à un réseau électrique (340), dans lequel le réseau électrique (340) est configuré pour charger le premier système de gestion d'énergie embarqué (120a) à travers le câble traînant (330) lorsque le premier système de gestion d'énergie embarqué (120a) se trouve à l'intérieur de la station (130), et comprenant un dispositif d'automatisation matérielle (350) configuré pour connecter le câble traînant (330) au premier système de gestion d'énergie embarqué (120a), dans lequel le dispositif d'automatisation matérielle (350) est un mécanisme avec les degrés de liberté dédiés requis pour saisir, tirer, libérer, retirer et/ou insérer le premier système de gestion d'énergie embarqué.

13. Procédé de fonctionnement d'un système d'ascenseur (101) comprenant :
le déplacement, à l'aide d'un système de propulsion (130), d'une cabine d'ascenseur (103) à travers une cage d'ascenseur (117) ;
l'alimentation, à l'aide d'un premier système de gestion d'énergie embarqué (120a), du système de propulsion (130) ; et
le déplacement, à l'aide du système de propulsion (130), du système de propulsion (130), de la cabine d'ascenseur (103) et du premier système de gestion d'énergie embarqué (120a) vers une station (310) pour remplacer le premier système de gestion d'énergie embarqué (120a), dans lequel le premier système de gestion d'énergie embarqué (120a) est configuré pour être rechargé lorsqu'il est détaché du système de propulsion (130) et remplacé par un second système de gestion d'énergie embarqué (120b), le second système de gestion d'énergie embarqué (120b) étant configuré pour alimenter le système de propulsion (130) lorsque le premier système de gestion d'énergie embarqué (120a) est détaché, dans lequel la cabine d'ascenseur (103), le système de propulsion (130) et la première poutre de guidage (111a) sont configurés pour passer d'une première section verticale (117a) de la cage d'ascenseur (117) à une seconde section verticale (117b) de la cage d'ascenseur (117) lorsque la cabine d'ascenseur (103) et le système de propulsion (130) sont situés dans une station (310), dans lequel la station (310) est au moins l'une parmi une station de transfert, une station-service ou une aire de stationnement.

14. Procédé selon la revendication 12 ou 13, dans lequel le système de propulsion (130) est un système de plate-forme à poutre (130) et le déplacement, à l'aide d'un système de propulsion (130), d'une cabine d'ascenseur (103) à travers une cage d'ascenseur (117) comprend en outre :
la rotation, à l'aide d'un premier moteur électrique (132a) d'un système de plate-forme à poutre (130), d'une première roue (134a), la première roue (134a) étant en contact avec une première surface (112a) d'une première poutre de guidage (111a) qui s'étend verticalement à travers la cage d'ascenseur (117).

15. Système d'ascenseur selon la revendication 1 ou 9, ou procédé selon la revendication 12, dans lequel le dispositif d'automatisation matérielle est un bras robotique.
